# EUROPEAN PATENT SPECIFICATION

(11) **EP 1 753 203 B1**
(45) Date of publication and mention of the grant of the patent: **21.01.2009**
(21) Application number: 06722301.6
(22) Date of filing: 11.04.2006
(51) Int. Cl.: H04L 29/14

(54) **A METHOD FOR IMPLEMENTING THE BI-DIRECTIONAL PROTECTION SWITCH OF MULTIPLE PROTOCOL LABEL SWITCH**
VERFAHREN ZUR IMPLEMENTIERUNG EINER BIDIREKTIONALEN MPLS-SCHUTZUMSCHALTUNG
PROCEDE DE MISE EN OEUVRE DE COMMUTATION DE PROTECTION BIDIRECTIONNELLE POUR COMMUTATION D'ETIQUETTE DE PROTOCOLE MULTIPLE

(30) Priority: 15.04.2005 CN 200510064585
(43) Date of publication of application: 14.02.2007
(73) Proprietor: Huawei Technologies Co., Ltd., Longgang District Shenzhen 518129 (CN)
(72) Inventor: ZHAI, Suping, Huawei Administration Building, Guangdong 518129 (CN)
(74) Representative: Thun, Clemens
(86) International application number: PCT/CN2006/000649
(87) International publication number: WO 2006/108353

(56) References cited:
- WO-A1-02/01909
- WO-A1-03/071745
- CN-A- 1 394 053
- CN-A- 1 435 975
- CCAMP GMPLS P&R DESIGN TEAM DIMITRI PAPADIMITRIOU (EDITOR) ERIC MANNIE (EDITOR): "Analysis of Generalized Multi-Protocol Label Switching (GMPLS)-based Recovery Mechanisms (including Protection and Restoration)" IETF STANDARD-WORKING-DRAFT, INTERNET ENGINEERING TASK FORCE, IETF, CH, vol. ccamp, no. 4, October 2004 (2004-10), pages 1-42, XP015038126 ISSN: 0000-0004
- CHANGCHENG HUANG ET AL: "Building Reliable MPLS Networks Using a Path Protection Mechanism" IEEE COMMUNICATIONS MAGAZINE, IEEE SERVICE CENTER, PISCATAWAY, US, vol. 40, no. 3, March 2002 (2002-03), pages 156-162, XP011092802 ISSN: 0163-6804

## Description

### Field of the Technology

The present invention relates to network communication technology, and more particularly, to a method for implementing bidirectional protection switching in a Multiple Protocol Label Switching Network.

### Background of the Invention

With the development of the network technology, Ethernet services grow step by step from Local Area Networks (LAN) to Metropolitan Area Networks (MAN) and telecommunication networks. For the continuously growing next generation Ethernet services, Multiple Protocol Label Switching (MPLS), based on its unique advantages, has emerged as a first choice among the network technologies. The advantages of the MPLS include: rapid recovery, network scalability, Quality of Service (QoS) ability, service congregation ability and inter-operation of services, etc.

As the MPLS technology has become the key technology of the IP network multi-service bearer, defect detection and protection switching in the MPLS come to be an important concern in the industry so as to ensure that an Operation, Administration and Maintenance (OAM) mechanism of the MPLS can guarantee the high quality and smooth operations of the services and largely reduce the network operation and maintenance costs.

Two basic unidirectional MPLS protection mechanisms are provided in the related arts, that is, 1+1 protection switching structure and 1:1 protection switching structure. The 1+1 protection switching refers to: working traffic is reproduced in a working Label Switching Path (LSP) and a protection LSP simultaneously, then the working traffic in one of the two LSPs is received at a Label Switching Router (LSR) at a merging end of the two paths. The 1:1 protection switching includes: working traffic is only transported by either the working LSP or the protection LSP. Usually a domain equipped with a protection switching structure is called a protection domain, which includes two ends. The end which receives a switching request from the other end and implements switching is called a source end in the protection domain; the other end is the destination end which initiates the switching request in the protection domain.

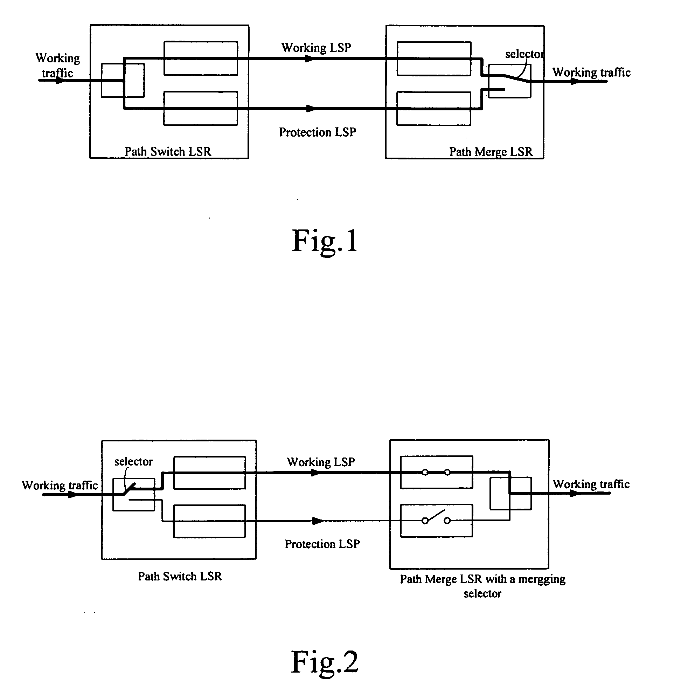

Figure 1 is a schematic diagram illustrating a unidirectional 1 + 1 protection switching structure. As shown in Fig. 1, the receiving end, which receives the working traffic from the working LSP in the unidirectional 1 + 1 protection switching structure in normal situations is a path merge LSR. When the path merge LSR detects that the working LSP has defects, the protection mechanism is initiated to switch a selector at the path merge LSR so as to achieve the unidirectional protection, i.e., to implement the switch operation from the working LSP to the protection LSP, so as to make the working traffic received from the protection LSP which is in normal state.

Figure 2 is a schematic diagram illustrating a unidirectional 1:1 protection switching structure. As shown in Fig. 2, the receiving end which receives the working traffic from the working LSP in the unidirectional 1:1 protection switching structure in normal situations is a path merge LSR. When the path merge LSR detects that the working LSP has defects, the path merge LSR initiates the protection mechanism, and sends a Backward Defect Indication (BDI) along the way to the path switch LSR. Upon receiving the BDI, no matter whether the local protection LSP is functioning or not, the path switch LSR implements an LSP switching by the selector and thus achieves a unidirectional path protection, i.e. switches the working traffic from the working LSP to the protection LSP.

It is easy to conclude from the above descriptions that the MPLS data plane protection mechanism in the prior art only provides a protection switching mechanism for the unidirectional data channels in the MPLS, and does not offer any solution for the protection switching for a bidirectional data channel in the MPLS. And in the 1:1 protection switching, which achieves the protection of the unidirectional data channel through defect indications such as the BDI, there is no confirmation mechanism at either ends of the protection domain. The selector at the source end relies solely on the BDI from a near end and false actions are thus easy to be triggered, and therefore the reliability of service communication will be affected.

XP 15038126 provides an analysis grid to evaluate, compare and contrast the Generalized Multi-Protocol Label Switching (GMPLS) protocol suite capabilities with respect to the recovery mechanisms currently proposed at the IETF CCAMP Working Group. A detailed analysis of each of the recovery phases is provided using the terminology defined in a companion document.

XP 11092802 discloses a PSL-oriented path protection mechanism that consists of three components: a reverse notification tree, a hello protocol, and a lightweight notification transport protocol. One of the key issues in any path protection mechanism is the delay experienced by an FIS message. The provided mechanism minimized this delay by: building a fast and efficient notification tree structure; and using a lightweight transportation mechanism for that notification message, which reduces the overhead associated with handshaking and other synchronization requirements.

### Summary of the Invention

The invention provides a method for implementing a bidirectional protection switching in a Multiple Protocol Label Switching (MPLS) network, including:
configuring bidirectional protection switching strategy for at least two bidirectional Label Switching Paths (LSPs) in an MPLS network on the basis of an Automatic Protection Switching (APS) protocol, wherein each of the bidirectional LSPs comprises two LSPs in opposite directions and one of the bidirectional LSPs is a bidirectional working LSP and the other is a bidirectional protection LSP, and
using the APS protocol to switch from the bidirectional working LSP to the bidirectional protection LSP for working traffic according to the configured bidirectional protection switching strategy when the bidirectional protection switching is decided to implement.

The step of configuring the bidirectional protection switching strategy for the bidirectional LSPs inlcudes:
configuring the corresponding protection switching strategy at source ends or destination ends corresponding to the LSPs which are of the same direction among the bidirectional LSPs, respectively.

The step that the bidirectional protection switching is decided to implement includes:
when an Operation, Administration and Maintenance (OAM) message received by the ends in the protection domain indicates that the protection switching is needed, the ends deciding that the protection switching is needed.

The OAM message includes:
an APS protocol field, for bearing the protection switching information based on the APS protocol.

The step of using the APS protocol to switch from the bidirectional working LSP to the bidirectional protection LSP includes:
each of the ends in the protection domain sending a protection switching request to the corresponding peer end when deciding to implement the bidirectional protecting switching;
upon receiving the protection switching request, the peer end switching from the bidirectional working LSP to the bidirectional protection LSP according to the bidirectional protection switching strategy, and sending a response to the end which sends the protection switching request;
upon receiving the response, the end implementing corresponding protection switching operation locally, switching from the bidirectional working LSP to the bidirectional protection LSP.

The step of using the APS protocol to switch from the bidirectional working LSP to the bidirectional protection LSP is implemented based on the comparison between the protection switching information in the APS protocol field of the OAM message received from the peer end and the bidirectional protection switching strategy saved in the local end.

Before using the APS protocol to switch from the bidirectional working LSP to the bidirectional protection LSP, the method further includes:
the bidirectional working LSP and bidirectional protection LSP are determined based on the information saved in a local Label Switching Router (LSR) at the start-up of the source end or destination end, and transmitting the working traffic through the working LSP and the protection LSP at the same time, or through the working LSP only.

The OAM message is a Connectivity Verification (CV) message or a Fast Failure Detection (FFD) message;
the step that the bidirectional protection switching is decided to implement includes:
inserting the CV or FFD message at the source ends corresponding to the working LSP and the protection LSP in the MPLS network;
the destination ends corresponding to the working LSP and the protection LSP deciding whether the protection switching is needed according to the CV / FFD message.

The APS protocol field includes: a request/state field, a protection type field, a requested signal field and a bridged signal field.

Before deciding that the protection switching is needed, the method further includes:
the end which receives the OAM message comparing priority level of the protection switching information pre-configured therein with the priority level of the protection switching information born in the request/state field of the APS protocol field in the OAM message received; if the priority level of the protection switching information received is lower than that pre-configured in the end, no protection switching being implemented; otherwise implementing the protection switching.

The protection switching strategy includes: information of the protection LSP corresponding to the working LSP and necessary switching conditions for the protection switching.

Further, a system for implementing a bidirectional protection switching in a Multiple Protocol Label Switching, MPLS, network is provided, wherein the system comprises:
means for configuring bidirectional protection switching strategy for two bidirectional Label Switching Paths, LSPs, in an MPLS network on the basis of an Automatic Protection Switching, APS, protocol, wherein each of the bidirectional LSPs comprises two LSPs in opposite directions and one of the bidirectional LSPs is a bidirectional working LSP and the other is a bidirectional protection LSP, and
means for using the APS protocol to switch from the bidirectional working LSP to the bidirectional protection LSP for working traffic according to the configured bidirectional protection switching strategy when the bidirectional protection switching is decided to implement.

It can be seen from the above technical solution provided in this invention, that the method provided by this invention effectively protects the bidirectional data traffic of the MPLS LSPs in a timely manner, and even more prevents unequal time delays of the working traffic in two directions in case of unidirectional switching operations and therefore ensures equal delays of the working traffic in the two directions. Besides, this invention introduces an Automatic Protect Switch (APS) protocol including the unidirectional data channel protection in the MPLS LSP and thus provides a uniform mechanism for both the unidirectional and the bidirectional protection which may be easily popularized and applied in the related art. Moreover, in the implementation of this invention, after the bidirectional protection switching, the LSP having defects is idle and can be repaired separately without affecting normal working traffic.

### Brief Description of the Drawings

Figure 1 is a schematic diagram illustrating an existing unidirectional 1+1 protection switching structure;
Figure 2 is a schematic diagram illustrating an existing unidirectional 1:1 protection switching structure;
Figure 3 is a schematic diagram illustrating a bidirectional 1+1 protection switching structure in accordance with an embodiment of the present invention;
Figure 4 is a schematic diagram illustrating the bidirectional 1+1 protection switching structure in case that LSP 1 in Figure 3 has defects;
Figure 5 is a schematic diagram illustrating the bidirectional 1+1 protection switching structure in case that LSP2 in Figure 3 has defects;
Figure 6 is a schematic diagram illustrating the bidirectional 1+1 protection switching structure in case that both LSP1 and LSP2 in Figure 3 have defects;
Figure 7 is a schematic diagram illustrating a bidirectional 1:1 protection switching structure in accordance with another embodiment of the present invention;
Figure 8 is a schematic diagram illustrating the bidirectional 1:1 protection switching structure in case that LSP2 in Figure 7 has defects.

### Detailed description of the Invention

The method provided for implementing the bidirectional protection switching in a MPLS network according to an embodiment of the present invention includes:
Firstly, in the MPLS network, configuring a bidirectional protection switching strategy for a bidirectional LSP based on an Automatic Protection Switching (APS) protocol. The detailed configuring process includes: in the MPLS network determining a protection domain according to the demands; in the protection domain determining two or more bidirectional LSPs, each of which includes two LSPs in opposite directions; defining one of the bidirectional LSPs as the working LSP and the rest as the protection LSP(s); configuring the corresponding protection switching strategy at the source ends or destination ends corresponding to the LSPs with the same direction in the bidirectional LSPs, respectively. The protection switching strategy includes: information of the protection LSP(s) corresponding to the working LSP and necessary switching conditions for the protection switching, e.g., when a protection switching request is received, protection switching operation should be determined. It should be noted that one working LSP may correspond to one or multiple pieces of protection LSPs.
Secondly, the bidirectional protection switching is implemented according to the pre-configured bidirectional protection switching strategy when the MPLS network node determines that the protection switching is necessary to be implemented on the basis of the information born in the APS protocol field of the OAM message received. The APS protocol field of the OAM message bears the protection switching information defined according to the APS protocol.

A preferred embodiment of this invention is hereinafter described in detail with reference to the accompanying drawings to further clarify the aim, technical act and advantages of this invention.

The embodiment of the present invention is implemented on the basis of the APS protocol; therefore the format of an OAM message with the APS protocol field is described hereinafter to provide a clearer understanding of this invention. The format of an OAM message with the APS protocol field is shown in Table 1:

**Table 1**

| Function Type (09Hex) | Reserved (00Hex) | TTSI (optional, if not used to configure to all 00Hex) | APS protocol Octets | Padding (all 00Hex) | BIP 16 |
|---|---|---|---|---|---|
| 1 octet | 3 octet | 20 octets | 3 octets | 15 octets | 2 octets |

In Table 1, the Function Type field is used to identify the type of the OAM message. In this embodiment, the value of the Function Type field is 0x9 in hex for indicating that the OAM message is an MPLS APS protocol message. The values of the Function Type field may be any other value, as long as it is agreed beforehand.

The Reserved field is used for 32bit alignment and extension. The Trial Termination Source Identifier (TTSI) field identifies a source end corresponding to the path. The Padding field is used to meet the minimum length requirement of some media; and the BIP 16 field is used for verification.

The APS protocol field in Table 1 is a new field added according to the embodiment of the present invention, which includes a value in octets used for denoting the protection switching information determined according to the APS protocol. The format of the APS protocol field is shown in Table 2:

**Table 2**

| | | | | | | | | | | | | | | | | | | | | | | | |
|---|---|---|---|---|---|---|---|---|---|---|---|---|---|---|---|---|---|---|---|---|---|---|---|
| 1 | | | | | | | | 2 | | | | | | | | 3 | | | | | | | |
| 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| equest/state | | | | Protection type | | | | Requested Signal | | | | | | | | Bridged Signal | | | | | | | |
| | | | | A | B | D | R | | | | | | | | | | | | | | | | |

As shown in Table 2, the APS protocol field includes a request / state field, a protection type field, a requested signal field and a bridged signal field. Table 3 lists the definitions and values of the fields within the APS protocol field in Table 2 which are configured according to the demands of the protection switching:

**Table 3**

| Field | | Value | Description |
|---|---|---|---|
| Request/State | | 1111 | LO, Lockout of Protection |
| | | 1110 | FS, Forced Switch |
| | | 1100 | SF, Signal Fail |
| | | 1010 | SD, Signal Degrade |
| | | 1000 | MS, Manual Switch |
| | | 0110 | WTR, Wait to Restore |
| | | 0100 | EXER. Exercise |
| | | 0010 | RR, Reverse Request |
| | | 0001 | DNR, Do Not Revert |
| | | 0000 | NR, No Request |
| | | Others | Reserved for future international standardization |
| Protection Type | A | 0 | No APS Channel |
| | | 1 | APS Channel |
| | B | 0 | 1+1 Permanent Bridge |
| | | 1 | 1 :n no Permanent Bridge |
| | D | 0 | Unidirectional switching |
| | | 1 | Bidirectional switching |
| | R | 0 | Non-Invertive operation |
| | | 1 | Invertive operation |
| Requested Signal | | 0 | Null Signal |
| | | 1-254 | Normal Traffic Signal 1-254 |
| | | 255 | Extra Traffic Signal |
| Bridged Signal | | 0 | Null Signal |
| | | 1-254 | Normal Traffic Signal 1-254 |
| | | 255 | Extra Traffic Signal |

The detailed description of this invention is given hereinafter based on the above-described format and contents of the OAM message with the APS protocol field.

This invention includes two application structures for the bidirectional protection switching, that is, 1+1 bidirectional protection switching and 1:1 bidirectional protection switching.

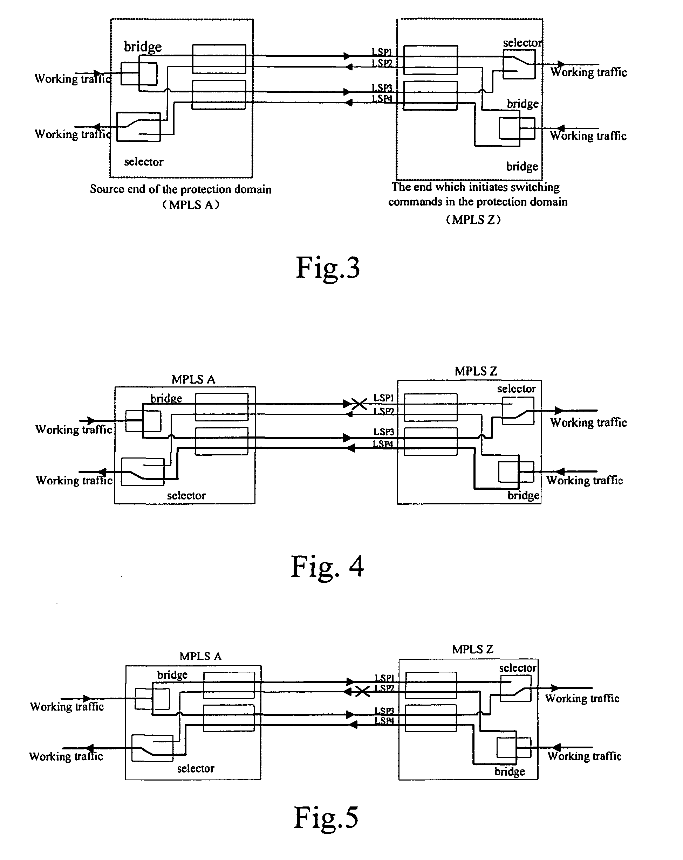

Figure 3 is a schematic diagram illustrating the bidirectional 1+1 protection switching structure in accordance with an embodiment of this invention. As shown in Figure 3, in the bidirectional 1+1 protection switching structure, the selector at the destination end in the protection domain decides whether to implement the protection switching based on the comparison between the information on protection switching in the APS protocol message sent from the peer end thereof and the information on protection switching configured in the local LSR, e.g. whether to implement the unidirectional switching, invertible switching, etc.

In normal situation, working traffic is transported by the working LSP and the protection LSP bidirectionally at the same time in the 1+1 protection switching pattern. From the LSPs connected with the selectors as shown in Figure 3, it can be seen that LSP 1 and LSP2 are the working LSPs, LSP3 and LSP 4 are the protection LSPs. When the OAM message defined in the current protocol, such as Connectivity Verification (CV) or Fast Failure Detection (FFD) message, is used for verifying whether the LSPs are available or not, the message will be sent at the source ends respectively corresponding to the working LSP and the protection LSP, transported to the corresponding destination ends by the two LSPs.

An example is given below to illustrate the detailed operations of the protection switching in the 1+1 bidirectional protection switching mechanism when defect occurs.

Figure 4 is a schematic diagram illustrating the bidirectional 1+1 protection switching structure when LSP 1 in Figure 3 fails. As shown in Figure 4, provided that MPLS A is the source end corresponding to LSP1 and LSP3 in the protection domain, MPLS Z is the corresponding destination end which initiates the switching request in the protection domain, working traffic is transported by LSP1 and LSP2 in normal cases. If LSP1 fails in the direction from MPLS A to MPLS Z, as MPLS Z cannot receive the CV or FFD message, it detects a defect of Loss Of Connection (dLOC), or a defect of Trail Termination Source Identifier (dTTSI) mismatch, or dTTSI mismerge, or a defect of Express (dExpress), etc. Then MPLS Z, based on the APS protocol, requests to implement a 2-phase protection switching which means information interaction will occur twice. The detailed process of the bidirectional protection switching is:
MPLS Z informs MPLS A of relative protection switching information through sending an APS protocol message with a protection switching request; MPLS A switches the selector to LSP4 and returns a switching completion message as an APS response to MPLS Z upon determining to implement the protection switching based on the comparison between the protection switching information saved in MPLS A itself and the protection switching information born in the request / state field of the APS protocol field in the protection switching request received from MPLS Z. It should be noted that if the priority level of the protection switching information received is lower than that of the protection switching information saved in MPLS A itself, e.g., when the protection switching information saved in MPLS A includes the lockout of protection value, it shall be determined that no protection switching is needed.

And then MPLS Z switches the selector at the local end to LSP3 based on the switching completion message received from MPLS A. Now the working traffic is switched from LSP1 and LSP2 to LSP3 and LSP4.

Figure 5 is a schematic diagram illustrating the bidirectional 1+1 protection switching structure in case LSP2 in Figure 3 fails. As shown in Figure 5, provided that working traffic is transported by LSP1 and LSP2 in normal cases, and when LSP2 fails in the direction from MPLS Z to MPLS A, as MPLS A cannot receive the CV or FFD message, MPLS A will detect dLOC, or dTTSI mismatch, or dTTSI mismerge, or dExpress, etc. Then MPLS A requests to implement the protection switching in the way of 2-phase protection switching based on the APS protocol. The detailed operation of the bidirectional protection switching includes:
MPLS A informs MPLS Z of relative protection switching information through sending an APS protocol message with a protection switching request; MPLS Z switches the selector to LPS3 and returns a switching completion message as an APS response to MPLS A upon determining to implement the protection switching based on the comparison between the protection switching information saved in MPLS Z itself and the protection switching information born in the request / state field of the APS protocol field in the protection switching request received from MPLS A. It should be noted that if the priority level of the protection switching information received is lower than that of the protection switching information saved in MPLS Z itself, e.g., when the protection switching information saved in MPLS Z includes the lockout of protection value, it shall be determined that no protection switching is needed.

And then MPLS A switches the selector at the local end to LSP4 based on the switching completion message received from MPLS Z and completes the whole bidirectional protection switching flow.

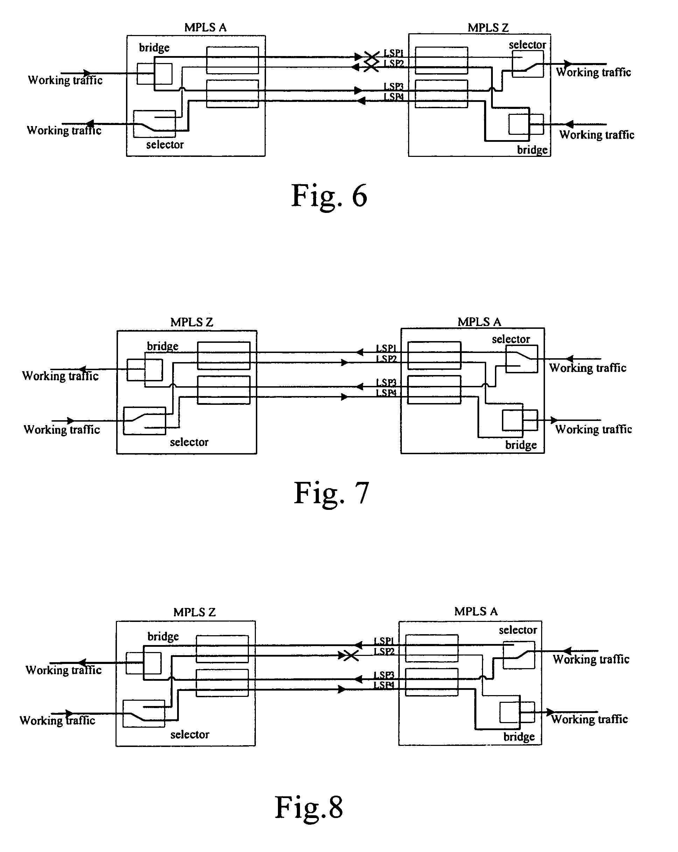

Figure 6 is a schematic diagram illustrating the bidirectional 1+1 protection switching structure in case LSP1 and LSP2 in Figure 3 fail. As shown in Figure 6, provided that in normal cases working traffic is transported by LSP 1 and LSP 2, when both LSP 1 and LSP2, which constitute a bidirectional LSP, fail at the same time, there are 3 possible situations given as below.

In the first possible situation:
MPLS A and MPLS Z detect the defects in LSP1 and LSP2 at the same time, and send an APS protocol message with a protection switching request to their peer ends, respectively;
according to the protection switching request, MPLS A and MPLS Z check whether the protection switching information, e.g., the lockout of protection value, is still valid before deciding whether to implement the protection switching. If the lockout of protection value is invalid, the protection switching shall be implemented at both ends simultaneously through switching the corresponding selectors and an APS response shall be sent to their peer ends at the same time informing the peer end that the switch has already been completed;
the peer ends receives the APS response without any further operation since the local protection switching information is consistent with the protection information born by the APS protocol field in the local end and the switching operation at the selectors has been completed.

In the second possible situation:
MPLS A detects the defects in LSP2 first and initiates an APS protocol message with a protection switching request. The corresponding operations are the same as the implementation example shown in Figure 5.

In the third possible situation:
MPLS Z detects the defects in LSP1 first and initiates an APS protocol message with a protection switching request. The corresponding operations are the same as the implementation example shown in Figure 4.

Figure 7 is a schematic diagram illustrating the bidirectional 1:1 protection switching structure in accordance with another embodiment of this invention. The detailed descriptions of such structure are given below.

In the bidirectional 1:1 protection structure as shown in Figure 7, MPLS A, as a source end in the protection domain, chooses the working LSP or the protection LSP for transmitting the working traffic through switching the selectors,. From the LSPs connected with the selectors shown in Figure 7, it can be seen that LSP1 and LSP2 are the working LSPs, LSP3 and LSP4 are the protection LSPs. LSP1 and LSP3 always merge at MPLS Z, as the destination end thereof. If the CV or FFD message is used to verify the availability of the link of the LSP, the CV or FED message will be sent at the source end in the protection domain, and transported to the corresponding destination end; both the working LSP and the protection LSP send the CV or FFD message.

The operation of the bidirectional 1:1 protection switching mechanism provided in accordance with this embodiment of the present invention in case the defect occurs are described below:
Figure 8 is a schematic diagram illustrating the bidirectional 1:1 protection switching structure in case LSP2 in Figure 7 fails. As shown in Figure 8, provided that working traffic is transported by LSP1 and LSP2 in normal cases, and when LSP2 fails in the direction from MPLS Z to MPLS A, as the MPLS A cannot receive the CV or FFD message, MPLS A shall detect the defects in LSP2 and request to implement the 2-phase protection switching based on the APS protocol. The detailed operations of the bidirectional protection switching include:
   MPLS A informs MPLS Z of relative protection switching information through an APS protocol message with a protection switching request. MPLS Z switches the selector to LPS4 and returns a switching completion message as an APS response to MPLS A upon determining that the protection switching is needed based on the comparison between the protection switching information saved in MPLS Z itself and the protection switching information born in the request / state field of the APS protocol field in the protection switching request received from MPLS A. It should be noted that if the priority level of the protection switching information received is lower than that of the protection switching information saved in MPLS A itself, e.g., when the protection switching information saved in MPLS A includes the lockout of protection value, it shall be determined that no protection switching is needed.

And then MPLS A switches the selector at the local end to LSP3 based on the information received from MPLS Z and completes the whole bidirectional switching flow.

The unidirectional protection switching can also be achieved with the method provided in accordance with an embodiment of this invention.

In the unidirectional 1:1 protection switching, defects are detected at the Path Merge LSR and a message shall be sent to the Path Switch LSR to implement the protection switching. Interaction of the state information from both ends based on the APS protocol allows the Path Merge LSR and the Path Switch LSR to recognize the defect request priority through the comparison between the priority level of the local switching information and that of the information sent from the peer end. The Path Switch LSR finally decides whether to implement the protection switching. If the priority level of the information from the peer end is lower than that in the local end, the protection switching shall not be implemented.

The foregoing is the only preferred embodiments of this invention and is not used for limiting this invention, any modification, equivalent replacement or improvement made under the principles of this invention is included in and shall be protected by the protection scope of this invention as set by the appended claims.

## Claims

1. A method for implementing a bidirectional protection switching in a Multiple Protocol Label Switching, MPLS, network, **characterized in that** the method comprises:
configuring bidirectional protection switching strategy for two bidirectional Label Switching Paths, LSPs, in an MPLS network on the basis of an Automatic Protection Switching, APS, protocol, wherein each of the bidirectional LSPs comprises two LSPs in opposite directions and one of the bidirectional LSPs is a bidirectional working LSP and the other is a bidirectional protection LSP, and
using the APS protocol to switch from the bidirectional working LSP to the bidirectional protection LSP for working traffic according to the configured bidirectional protection switching strategy when the bidirectional protection switching is decided to implement.

2. The method according to Claim 1, wherein the step of configuring the bidirectional protection switching strategy for the bidirectional LSPs comprises:
configuring the corresponding protection switching strategy at source ends or destination ends corresponding to the LSPs which are of the same direction among the bidirectional LSPs, respectively.

3. The method according to Claim 2, wherein the step that the bidirectional protection switching is decided to implement comprise:
when an Operation, Administration and Maintenance, OAM, message received by the ends in the protection domain indicates that the protection switching is needed, the ends deciding that the protection switching is needed.

4. The method according to Claim 3, wherein, the OAM message comprises:
an APS protocol field; for bearing the protection switching information based on the APS protocol.

5. The method according to Claim 4, wherein, the step of using the APS protocol to switch from the bidirectional working LSP to the bidirectional protection LSP comprises:
each of the ends in the protection domain sending a protection switching request to the corresponding peer end when deciding to implement the bidirectional protecting switching;
upon receiving the protection switching request, the peer end switching from the bidirectional working LSP to the bidirectional protection LSP according to the bidirectional protection switching strategy, and sending a response to the end which sends the protection switching request;
upon receiving the response, the end implementing corresponding protection switching operation locally, switching from the bidirectional working LSP to the bidirectional protection LSP.

6. The method according to Claim 4, wherein, the step of using the APS protocol to switch from the bidirectional working LSP to the bidirectional protection LSP is implemented based on the comparison between the protection switching information in the APS protocol field of the OAM message received from the peer end and the bidirectional protection switching strategy saved in the local end.

7. The method according to Claim 4, before using the APS protocol to switch from the bidirectional working LSP to the bidirectional protection LSP, further comprising:
the bidirectional working LSP and bidirectional protection LSP are determined based on the information saved in a local Label Switching Router, LSR, at the start-up of the source end or destination end, and transmitting the working traffic through the working LSP and the protection LSP at the same time, or through the working LSP only.

8. The method according to Claim 4, wherein, the OAM message is a Connectivity Verification, CV, message or a Fast Failure Detection, FFD, message;
the step that the bidirectional protection switching is decided to implement comprises:
inserting the CV or FFD message at the source ends corresponding to the working LSP and the protection LSP in the MPLS network;
the destination ends corresponding to the working LSP and the protection LSP deciding whether the protection switching is needed according to the CV / FFD message.

9. The method according to Claim 4, wherein, the APS protocol field comprises:
a request/state field, a protection type field, a requested signal field and a bridged signal field.

10. The method according to Claim 9, before deciding that the protection switching is needed, further comprising:
the end which receives the OAM message comparing priority level of the protection switching information pre-configured therein with the priority level of the protection switching information born in the request/state field of the APS protocol field in the OAM message received; if the priority level of the protection switching information received is lower than that pre-configured in the end, no protection switching being implemented; otherwise implementing the protection switching.

11. The method according to Claim 1, wherein the protection switching strategy comprises: information of the protection LSP corresponding to the working LSP and necessary switching conditions for the protection switching.

12. A system for implementing a bidirectional protection switching in a Multiple Protocol Label Switching, MPLS, network, **characterized in that** the system comprises:
means for configuring bidirectional protection switching strategy for two bidirectional Label Switching Paths, LSPs, in an MPLS network on the basis of an Automatic Protection Switching, APS, protocol, wherein each of the bidirectional LSPs comprises two LSPs in opposite directions and one of the bidirectional LSPs is a bidirectional working LSP and the other is a bidirectional protection LSP, and
means for using the APS protocol to switch from the bidirectional working LSP to the bidirectional protection LSP for working traffic according to the configured bidirectional protection switching strategy when the bidirectional protection switching is decided to implement.

## Patentansprüche

1. Verfahren zum Implementieren einer bidirektionalen Schutzumschaltung in einem Multiple-Protocol-Label-Switching-Netzwerk, MPLS-Netz, **dadurch gekennzeichnet, dass** das Verfahren umfasst:
Konfigurieren einer bidirektionalen Strategie zur Schutzumschaltung für zwei bidirektionale Label Switching Pfade, LSPs, in einem MPLS-Netz auf der Basis eines Protokolls zur automatischen Schutzumschaltung, APS-Protokolls, wobei jeder der bidirektionalen LSPs zwei LSPs in entgegen gesetzte Richtungen umfasst, und wobei einer der bidirektionalen LSPs ein bidirektionaler Arbeits-LSP ist und der andere ein bidirektionaler Schutz-LSP ist, und
Verwenden des APS-Protokolls, um von dem bidirektionalen Arbeits-LSP für Arbeitsdatenverkehr zu dem bidirektionalen Schutz-LSP gemäß der konfigurierten bidirektionalen Strategie zur Schutzumschaltung umzuschalten, wenn die bidirektionale Schutzumschaltung zum Implementieren ausgewählt ist.

2. Verfahren nach Anspruch 1, wobei der Schritt des Konfigurierens der bidirektionalen Strategie zur Schutzumschaltung für die bidirektionalen LSPs umfasst:
Konfigurieren der korrespondierenden Strategie zur Schutzumschaltung an Source-Enden oder Destination-Enden, die den LSPs entsprechen, die unter den bidirektionalen LSPs entsprechend in der gleichen Richtung verlaufen.

3. Verfahren nach Anspruch 2, wobei der Schritt, dass die bidirektionale Schutzumschaltung zum Implementieren ausgewählt ist, umfasst:
dass die Enden entscheiden, dass die Schutzumschaltung benötigt wird, wenn eine Betriebs-, Verwaltungs- und Wartungs-Nachricht, OAM-Nachricht, die von den Enden in der Schutzdomäne empfangen wurde, anzeigt, dass die Schutzumschaltung benötigt wird.

4. Verfahren nach Anspruch 3, wobei die OAM-Nachricht umfasst:
ein APS-Protokoll-Feld, um die Schutzumschaltinformation basierend auf dem APS-Protokoll zu tragen.

5. Verfahren nach Anspruch 4, wobei der Schritt des Verwendens des APS-Protokolls, um von dem bidirektionalen Arbeits-LSP zu dem bidirektionalen Schutz-LSP umzuschalten, umfasst:
Senden einer Schutzumschalt-Anfrage durch jedes der Enden in der Schutzdomäne an das entsprechende gleichrangige Ende, wenn die bidirektionale Schutzumschaltung zum Implementieren ausgewählt ist;
bei Empfang der Schutzumschalt-Anfrage Umschalten durch die gleichrangige Seite von dem bidirektionalen Arbeits-LSP zu dem bidirektionalen Schutz-LSP entsprechend der bidirektionalen Strategie zur Schutzumschaltung, und Senden einer Antwort an das Ende, das die Schutzumschalt-Anfrage sendet;
bei Empfang der Antwort Umschalten durch das Ende, das lokal die korrespondierende Schutzumschaltfunktion implementiert, von dem bidirektionalen Arbeits-LSP zu dem bidirektionalen Schutz-LSP.

6. Verfahren nach Anspruch 4, wobei der Schritt des Verwendens des APS-Protokolls, um von dem bidirektionalen Arbeits-LSP zu dem bidirektionalen Schutz-LSP umzuschalten, basierend auf dem Vergleich zwischen der Schutzumschaltinformation in dem APS-Protokoll-Feld der OAM-Nachricht, die von dem gleichrangigen Ende empfangen wurde, und der bidirektionalen Strategie zur Schutzumschaltung, die in dem lokalen Ende gespeichert ist, implementiert wird.

7. Verfahren nach Anspruch 4, ferner vor dem Verwenden des APS-Protokolls, um von dem bidirektionalen Arbeits-LSP zu dem bidirektionalen Schutz-LSP umzuschalten, umfassend:
dass der bidirektionale Arbeits-LSP und der bidirektionale Schutz-LSP basierend auf den Informationen bestimmt worden sind, die in einem lokalen Label Switching Router, LSR, an dem Source-Ende oder dem Destination-Endes gespeichert sind,
und Übertragen des Arbeits-Datenverkehrs gleichzeitig durch den Arbeits-LSP und den Schutz-LSP oder durch den Arbeits-LSP alleine.

8. Verfahren nach Anspruch 4, wobei die OAM-Nachricht eine Connectivity Verifikations-Nachricht, CV-Nachricht, oder eine Fast Failure Detection Nachricht, FFD-Nachricht, ist;
und wobei der Schritt, bei dem die bidirektionale Schutzumschaltung zum Implementieren ausgewählt ist, umfasst:
Einfügen der CV- oder FFD-Nachricht an den Source-Enden entsprechend dem Arbeits-LSP und dem Schutz-LSP in das MPLS-Netz;
wobei die Destination-Enden dem Arbeits-LSP entsprechen und der
Schutz-LSP entscheidet, ob die Schutzumschaltung entsprechend der CV/FFD-Nachricht benötigt wird.

9. Verfahren nach Anspruch 4, wobei das APS-Protokoll-Feld umfasst:
ein Anfrage/Statusfeld, ein Schutztyp-Feld, ein angefordertes Signalfeld und ein überbrücktes Signalfeld.

10. Verfahren nach Anspruch 9, vor der Entscheidung, dass die Schutzumschaltung benötigt wird, ferner umfassend:
dass das Ende, welches die OAM-Nachricht empfängt, eine Prioritätsebene der Schutzumschaltinformation, die darin vorkonfiguriert ist, mit der Prioritätsebene der Schutzumschaltinformation vergleicht, die in dem Anfrage/Statusfeld des APS-Protokollfelds in der empfangenen OAM-Nachricht übertragen wurde; falls die Prioritätsebene der empfangenen Schutzumschaltinformation niedriger ist als die vorkonfigurierte an dem Ende, wird keine Schutzumschaltung implementiert, andernfalls erfolgt Implementieren der Schutzumschaltung.

11. Verfahren nach Anspruch 1, wobei die Strategie zur Schutzumschaltung umfasst: Information des Schutz-LSPs entsprechend dem Arbeits-LSP und notwendige Umschaltbedingungen für die Schutzumschaltung.

12. System zum Implementieren einer bidirektionalen Schutzumschaltung in einem Multiple Protocol Label Switching Netzwerk, MPLS-Netz, **dadurch gekennzeichnet, dass** das System umfasst:
Mittel, um eine bidirektionale Strategie zur Schutzumschaltung für zwei bidirektionale Label Switching Pfade, LSPs, in einem MPLS-Netz auf der Basis eines automatischen Schutzumschaltprotokolls, APS-Protokolls, zu konfigurieren, wobei jeder der bidirektionalen LSPs zwei LSPs in entgegen gesetzten Richtungen umfasst und einer der bidirektionalen LSPs ein bidirektionaler Arbeits-LSP ist und der andere ein bidirektionaler Schutz-LSP ist, und
Mittel zur Anwendung des APS-Protokolls, um von dem bidirektionalen Arbeits-LSP zu dem bidirektionalen Schutz-LSP für Arbeits-Datenaustausch gemäß der konfigurierten bidirektionalen Strategie zur Schutzumschaltung umzuschalten, wenn die bidirektionale Schutzumschaltung zum Implementieren ausgewählt ist.

## Revendications

1. Procédé de mise en oeuvre d'une commutation de protection bidirectionnelle pour un réseau de commutation d'Etiquette de Protocole Multiple, MPLS, **caractérisé en ce que** le procédé comprend:
configurer une stratégie de commutation de protection bidirectionnelle pour deux chemins de commutation d'Etiquette bidirectionnelle, LSPs, dans un réseau MPLS sur la base d'un Protocole de Commutation de Protection Automatique, APS, où chacun des LSPs bidirectionnels comprend deux LSPs dans des directions opposées, et un des LSPs bidirectionnels est un fonctionnement bidirectionnel LSP, et l'autre est une protection bidirectionnelle LSP, et
utiliser le protocole APS pour commuter du fonctionnement bidirectionnel LSP à la protection bidirectionnelle LSP pour un trafic fonctionnel selon la stratégie de commutation de protection bidirectionnelle configurée lorsqu'il a été décidé de mettre en oeuvre la commutation de protection bidirectionnelle.

2. Procédé selon la revendication 1, où l'étape de configuration de la stratégie de commutation de protection bidirectionnelle pour les LSPs bidirectionnels comprend:
configurer la stratégie de commutation de protection correspondante aux extrémités de source ou aux extrémités de destination d'une manière correspondante aux LSPs qui sont de la même direction parmi les LSPs bidirectionnels, respectivement.

3. Procédé selon la revendication 2, où l'étape de décision de la mise en oeuvre de la commutation de protection bidirectionnelle comprend:
lorsqu'un message d'opération, d'administration et de maintenance, OAM, reçu par les extrémités dans le domaine de protection indique que la commutation de protection est requise, les extrémités décidant que la commutation de protection est requise.

4. Procédé selon la revendication 3, où le message OAM comprend:
un champ de protocole APS, pour porter l'information de commutation de protection basée sur le protocole APS.

5. Procédé selon la revendication 4, où l'étape d'utilisation du protocole APS pour commuter du fonctionnement bidirectionnel LSP à la protection bidirectionnelle LSP comprend:
chacune des extrémités dans le domaine de protection transmettant une requête de commutation de protection à l'extrémité homologue correspondante lorsqu'il a été décidé de mettre en oeuvre la commutation de protection bidirectionnelle;
lors de la réception de la requête de commutation de protection, la commutation de l'extrémité homologue du fonctionnement bidirectionnel LSP à la protection bidirectionnelle LSP selon la stratégie de commutation de protection bidirectionnelle, et l'émission d'une réponse à l'extrémité qui envoie la requête de commutation de protection;
lors de la réception de la réponse, l'extrémité mettant en oeuvre l'opération de commutation de protection correspondante localement, commutant du fonctionnement bidirectionnel LSP à la protection bidirectionnelle LSP.

6. Procédé selon la revendication 4, où l'étape d'utilisation du protocole APS pour commuter du fonctionnement bidirectionnel LSP à la protection bidirectionnelle LSP est mise en oeuvre sur la base de la comparaison entre l'information de commutation de protection dans le champ de protocole APS du message OAM reçu de l'extrémité homologue et la stratégie de commutation de protection bidirectionnelle conservée dans l'extrémité locale.

7. Procédé selon la revendication 4, avant l'utilisation du protocole APS pour commuter du fonctionnement bidirectionnel LSP à la protection bidirectionnelle LSP, comprenant en outre:
le fonctionnement bidirectionnel LSP et la protection bidirectionnelle LSP sont déterminées sur la base des informations conservées dans un Routeur de Commutation d'Etiquette Locale, LSR, au début de l'extrémité de source ou de l'extrémité de destination, et la transmission du trafic fonctionnel à travers le LSP de fonctionnement et le LSP de protection en même temps, ou à travers le LSP de fonctionnement seulement.

8. Procédé selon la revendication 4, où le message OAM est un message de Vérification de Connectivité, CV, ou un message de Détection de Défaillance Rapide, FFD;
l'étape de décision de la mise en oeuvre de la commutation de protection bidirectionnelle comprend:
insérer le message CV ou FFD aux extrémités de source correspondant au LSP de fonctionnement et au LSP de protection dans le réseau MPLS;
les extrémités de destination correspondant au LSP de fonctionnement et au LSP de protection décidant si la commutation de protection est requise selon le message CV/FFD.

9. Procédé selon la revendication 4, où le champ de protocole APS comprend:
un champ de requête/état, un champ de type de protection, un champ signal requis et un champ signal à pont.

10. Procédé selon la revendication 9, avant la décision que la commutation de protection est requise, comprenant en outre:
l'extrémité qui reçoit le message OAM comparant le niveau de priorité de l'information de commutation de protection pré-configurée dans celle-ci avec le niveau de priorité de l'information de commutation de protection portée dans le champ de requête/état du champ de protocole APS dans le message OAM reçu; si le niveau de priorité de l'information de commutation de protection reçu est plus bas que celui préconfiguré dans l'extrémité, aucune commutation de protection n'est mise en oeuvre; sinon la mise en oeuvre de la commutation de protection.

11. Procédé selon la revendication 1, où la stratégie de commutation de protection comprend: l'information de la protection LSP correspondant au LSP de fonctionnement et des conditions de commutation nécessaires pour la commutation de protection.

12. Système pour la mise en oeuvre d'une commutation de protection bidirectionnelle pour un réseau de commutation d'Etiquette de Protocole Multiple, MPLS, **caractérisé en ce que** le système comprend:
des moyens pour configurer une stratégie de commutation de protection bidirectionnelle pour deux chemins de Commutation d'Etiquette Bidirectionnelle, LSPs, dans un réseau MPLS sur la base d'un Protocole de Commutation de Protection Automatique, APS, où chacun des LSPs bidirectionnels comprend deux LSPs dans des directions opposées, et un des LSPs bidirectionnels est un LSP de fonctionnement bidirectionnel et l'autre est une protection bidirectionnelle LSP, et
des moyens pour utiliser le protocole APS pour commuter du fonctionnement bidirectionnel LSP à la protection bidirectionnelle LSP pour le trafic fonctionnel selon la stratégie de commutation de protection bidirectionnelle configurée lorsqu'il a été décidé de mettre en oeuvre la commutation de protection bidirectionnelle.
